# EUROPÄISCHE PATENTSCHRIFT

(11) **EP 3 563 527 B1**
(45) Veröffentlichungstag und Bekanntmachung des Hinweises auf die Patenterteilung: **02.03.2022**
(21) Anmeldenummer: 18727781.9
(22) Anmeldetag: 25.05.2018
(51) Int. Cl.: H04L 12/40, B64C 13/42, B64C 13/50, G05D 1/00

(54) **FLUGSTEUERSYSTEM**
FLIGHT CONTROL SYSTEM
SYSTÈME DE COMMANDE DE VOL

(30) Priorität: 26.05.2017 DE 102017111527
(43) Veröffentlichungstag der Anmeldung: 06.11.2019
(73) Patentinhaber: Liebherr-Aerospace Lindenberg GmbH, 88161 Lindenberg/Allgäu (DE)
(72) Erfinder: MIELZAREK, Rainer, 88171 Weiler-Simmerberg (DE); KRONBURGER, Frank, 88161 Lindenberg (DE)
(74) Vertreter: Laufhütte, Dieter
(86) Internationale Anmeldenummer: PCT/EP2018/063799
(87) Internationale Veröffentlichungsnummer: WO 2018/215649

(56) Entgegenhaltungen:
- EP-A1- 1 310 848
- DE-A1-102005 008 556

## Beschreibung

Die vorliegende Erfindung betrifft ein Flugsteuersystem zum Betätigen von Steuerflächen eines Luftfahrzeuges.

Flugsteuersysteme dienen dazu, die Eingaben, die von einem Piloten oder von einem Flugsteuercomputer ausgehen, in entsprechende Bewegungen der verschiedenen Steuerflächen eines Luftfahrzeuges umzusetzen. Die Bewegungen von Steuerflächen eines Luftfahrzeuges haben während des Flugs des Luftfahrzeugs einen direkten Einfluss auf die Flugsteuerung, da damit die Flugbewegung des Luftfahrzeuges unmittelbar umgesetzt wird.

Bei heutzutage üblichen Fly-by-wire-Systemen werden die vom Cockpit oder einem Flugsteuerrechner ausgehenden Steuerbefehle nicht mehr wie früher üblich mithilfe von Seilzügen an die entsprechenden Steuerflächen übertragen, sondern mit Hilfe eine digitalen Datenübertragung an die über den Flugzeugkörper verteilt angeordneten Steuerflächen bzw. die Aktuatoren, welche die Steuerfläche betätigen, übermittelt. So wird bei der Fly-by-wire-Technik eine manuelle Eingabe des Piloten, beispielsweise mit Hilfe eines Joysticks, in elektronische Daten umgewandelt und über einen Datenbus an den entsprechenden Aktuator (=Betätigungseinheit) einer Steuerfläche des Luftfahrzeuges gesendet.

Oftmals ist es jedoch dabei erforderlich, dass die Daten von der Eingabe des Piloten auf Plausibilität, Zulässigkeit oder andere Anforderungen überprüft werden müssen oder hinsichtlich ihrer Eignung für das Ansteuern des Aktuators noch einer Umrechnung/Umrechnung unterzogen werden. Von daher werden diese Daten zuerst an eine sogenannte Aktuator-Steuerelektronik übertragen, bevor sie zu dem Aktuator der Steuerfläche gelangen. Diese Aktuator-Steuerelektronik (in der Fachsprache auch: ACE für Actuator Control Electric) wandelt die empfangenen Soll-Steuersignale, die bspw. von einer Joystick-Eingabe des Piloten stammen, in ein von der Aktuatoreinheit lesbares Format um und kann dabei auch überprüfen, ob die Soll-Steuereingabe innerhalb eines maximal zulässigen Grenzbereichs liegt.

Für die Flugsicherheit ist die Übertagung der Steuersignale an die Aktuatoren der Steuerflächen von herausragender Bedeutung. Kommt es zu einem Komplettausfall des Flugsteuersystems, können die Steuerflächen des Luftfahrzeugs nicht mehr angesteuert werden, was zur Manövrierunfähigkeit des Luftfahrzeugs führt. Von daher ist es üblich, das Flugsteuersystem redundant auszuführen. Dabei werden die Bussysteme zur Übertragung der Signale dupliziert und so eingerichtet, dass bei einem Ausfall eines der mehreren Bussysteme das verbleibende Bussystem die Aufgaben der Flugsteuerung weiterhin übernehmen kann. Ebenfalls redundante ausgeführt sind bspw. die Aktuatoren oder die Zentralrechner in der Aktuator-Steuerelektronik.

Aus der DE 10 2011 115 318 A1 ist ein Flugsteuersystem bekannt, das dazu ausgelegt ist, die Piloteneingaben (= Soll-Steuersignale für die Steuerflächen des Luftfahrzeugs) mit Hilfe von lokal angeordneten Elektroniken auszuwerten und über ein erstes Datennetzwerk an den mindestens einen Zentralrechner der Aktuator-Steuerelektronik zu übermitteln. Hierin werden die entsprechenden Stellkommandos errechnet und über ein zweites Datennetzwerk an die entsprechenden redundanten Aktuatoren der zu bewegenden Steuerflächen gesendet. Dabei ist sowohl das erste Datennetzwerk als auch das zweite Datennetzwerk redundant und typverschieden ausgeführt. Diese dissimilare Redundanz besitzt den Vorteil, dass ein systematischer Fehler, der sogenannte "common-mode-Fehler" im Wesentlichen sehr viel seltener auftritt oder sogar ausgeschlossen wird.

Nachteilig an dieser Offenbarung ist, dass nach einem generischen Fehler, der zum Ausfall eines der beiden Datennetzwerke führt, bereits ein Fehler des anderen redundant ausgeführten Datennetzwerks zum Ausfall der Betätigung einer oder mehrerer Steuerflächen führen kann. Weiter ist nachteilig, dass die Ausführung des Datennetzwerks bzw. des gesamten Bussystems mit unterschiedlichen Datennetzwerktypen einen sehr hohen Entwicklungs- und Kostenaufwand hardwareseitig als auch softwareseitig mit sich zieht, da zwei vollkommen unabhängige Bussysteme, die eine Vielzahl von ansteuerbaren Komponenten des Flugzeugs verbinden, programmiert und installiert werden müssen . Auch die Integration der unterschiedlichen Datennetzwerktypen ist besonders herausfordern.

Ferner offenbart die DE 10 2005 008 556 A1 eine Vorrichtung zur Steuerung von Flugzeugen, mit aerodynamischen Steuerflächen und deren Aktuatoren sowie mit pilotseitigen Bedienelementen, insbesondere zur einfachen und sicheren Steuerung von Flugzeugen der Zulassungsklassen JAR23, Class VSA, 1, II, III, IV sowie von Business Jets und Reginals der Zulassungsklasse JAR 25. Bereits bekannt sind so genannte "Full Fly-by-Wire"-Plattformen, die das Erfassen von Pilotenkommandos, das Ausführen der eigentlichen Steuerfunktion als auch die Ansteuerung der Stellorgane in elektronischer Form mit Hilfe von Computern durchführen. Die zentrale Herausforderung solcher Plattformen ist die Ausfallsicherheit. Fällt nämlich das System z.B. durch ein Versagen des Fly-by-Wire-Computers (FBWC) aus, so ist die Steuerbarkeit des Flugzeugs nicht mehr gegeben. Ein fataler Flugunfall wäre die Folge.

Zudem ist aus der EP 1 310 848 A1 ein Steuersystem zur Realisierung einer vollständigen "Fly-by-Wire"-Steuerung eines Luftfahrzeugs bekannt. In einem solchen System gibt es kein mechanisch gekoppeltes Backup zum elektronischen Steuergerät. Demnach wird ein dezentralisiertes Steuersystem bereitgestellt, bei dem die Steuergeräte in zwei unterschiedliche Gruppen unterteilt sind und die Steuerzuständigkeit der Flugsteuerung innerhalb jeder Gruppe weiter unterteilt wird, sodass eine vollständige Gruppe und ein weiteres Steuergerät ausfallen können, ohne dass eine Beeinträchtigung für den Piloten beim Fliegen des Flugzeugs auftritt.

Ausgehend von dem vorstehend beschriebenen Stand der Technik ist es die Aufgabe der vorliegenden Erfindung die Systemverfügbarkeit gegenüber den konventionellen bekannten Systemen zu verbessern ohne das Systemgewicht oder die Kosten des Systems zu erhöhen.

Diese Aufgabe wird erfindungsgemäß durch ein Flugsteuersystem für ein Luftfahrzeug gelöst, das sämtliche Merkmale des Anspruchs 1 aufweist.

Dadurch gelingt es, ein Flugsteuersystem für ein Luftfahrzeug bereitzustellen, dessen Entwicklungsaufwand und dessen damit verbundene Kosten bei gleichzeitiger verbesserter Systemverfügbarkeit verringert werden oder zumindest auf gleichem Niveau anzusetzen sind. Unter der Systemverfügbarkeit versteht man die geringere Wahrscheinlichkeit eines Ausfalls des Flugsteuersystems.

Dies gelingt mit einem Flugsteuersystem, das zum Betätigen einer Steuerfläche eines Luftfahrzeugs umfasst: mehrere Aktuatoren zum redundanten Betätigen einer Steuerfläche des Luftfahrzeugs, eine Aktuator-Steuerelektronik zum Entgegennehmen, Berechnen und Weiterleiten von Steuersignalen für die durch die mehreren Aktuatoren zu betätigende Steuerfläche, mehrere Fernelektronikeinheiten zum jeweiligen Ansteuern und Überwachen eines entsprechenden Aktuators, vorzugsweise auch zum Empfangen der von der Aktuator-Steuerelektronik gesendeten Signale, und ein erstes Datenbussystem zum Übermitteln von Daten zwischen der Aktuator-Steuerelektronik und den mehreren Fernelektronikeinheiten. Dabei ist vorgesehen, dass das erste Datenbussystem einen ersten Datenbus zum Übermitteln von Daten zwischen der Aktuator-Steuerelektronik und einer ersten der mehreren Fernelektronikeinheiten und einen zweiten Datenbus zum Übermitteln von Daten von Aktuator-Steuerelektronik und einer zweiten der mehreren Fernelektronikeinheiten aufweist, wobei der erste Datenbus und der zweite Datenbus auf der gleichen Bustechnologie basieren. Das Flugsteuersystem zeichnet sich dadurch aus, dass das erste Datenbussystem ferner einen Backup-Datenbus zum Übermitteln von Daten zwischen der Aktuator-Steuerelektronik und der ersten Fernelektronikeinheit aufweist, wobei der Backup-Datenbus in seiner Bustechnologie zu dem ersten Datenbus und dem zweiten Datenbus verschieden ist und nur mit Fernelektronikeinheiten verbunden ist, die zum Ansteuern der Steuerflächen für einen sicheren Flugbetrieb erforderlich sind, und wobei das Flugsteuersystem dazu ausgelegt ist, bei einem Fehlerzustand oder einem Ausfall des ersten Datenbusses und des zweiten Datenbusses den Backup-Datenbus zum Übermitteln von Daten zwischen der Aktuator-Steuerelektronik und der ersten Fernelektronikeinheit und/oder zwischen der ersten Verarbeitungseinheit und der Aktuator-Steuerelektronik zu verwenden.

Kommt es demnach zu dem ungünstigen Fall, dass die auf derselben Bustechnologie basierenden ersten und zweiten Datenbusse des ersten Datenbussystems beispielsweise aufgrund eines "common-mode-Fehlers" ausfallen, steht für das Flugsteuersystem noch der Backup-Datenbus zur Verfügung. Demnach kommt es nicht zu einem Zustand, indem das Luftfahrzeug manövrierunfähig ist. Aufgrund der Verwendung von nur einer Bustechnologie für den ersten und den zweiten Datenbus, die zueinander redundant ausgeführt sind, werden Kosten und Entwicklungsaufwand gespart.

Nach einer Fortbildung der Erfindung umfasst das Flugsteuersystem ferner mehrere Verarbeitungseinheiten zum redundanten Aufnehmen und Auswerten von Soll-Steuersignalen für die Steuerfläche, und ein zweites Datenbussystem, das in seinem konzeptionellen Aufbau den ersten Datenbussystem entspricht, wobei bei dem zweiten Datenbussystem eine erste der mehreren Verarbeitungseinheiten über einen ersten Datenbus an die Aktuator-Steuerelektronik angebunden ist, um die Soll-Steuersignale zu übermitteln, eine zweite der mehreren Verarbeitungseinheiten über einen zweiten Datenbus an die Aktuator-Steuerelektronik angebunden ist, um die Soll-Steuersignale zu übermitteln, und ein Backup-Datenbus mit der ersten Verarbeitungseinheit und der Aktuator-Steuerelektronik verbunden ist, um eine Übermittlung der Soll-Steuersignale an die Aktuator-Steuerelektronik zu ermöglichen.

Die Verarbeitungseinheiten dienen im Endeffekt dazu, die von dem Piloten eingegebenen Eingabesignale auf die Eingabegeräte (beispielsweise Joystick, Schubhebel oder dergleichen) auszuwerten und hieraus Soll-Steuersignale zu erzeugen, die über das zweite Datenbussystem an eine mehrere Zentralrechner umfassende Aktuator-Steuerelektronik (auch: ACE) gesendet werden. Die Aktuator-Steuerelektronik ist dann über das erste Datenbussystem an die Fernelektronikeinheiten (auch: Remote Electronic Units, REU) angeschlossen welche lokal zur Ansteuerung und Überwachung von Aktuatoren oder anderen Systemkomponenten in dem Luftfahrzeug nahe eines zugehörigen Aktuators angeordnet sind.

Eine als Aktuator bezeichnete Betätigungseinrichtung steht dabei für jede Art von Stellantrieb, die im Flugzeug eine Steuerfläche oder dergleichen bewegen kann. Dazu gehört beispielhaft ein Stellantrieb zur Ansteuerung eines Höhenruders, eines Seitenruders, eines Querruders, eines Spoilers, eines Vorflügels, einer Landeklappe oder eines Horizontalstabilisators eines Luftfahrzeugs.

Das erfindungsgemäße Flugsteuersystem umfasst demnach ein Hauptdatennetzwerk, das in sich redundant mit Hilfe der ersten Datenbusse und der zweiten Datenbusse der verschiedenen Datenbussysteme ausgestaltet ist, sowie einen Backup-Datennetzwerk, das dem Backup-Datenbus des ersten Datenbussystems und dem Backup-Datenbus des zweiten Datenbussystems umfasst. Fällt das Hauptdatennetzwerk aus, steht also keines der beiden zueinander redundant gebildeten Datenbusse zur Verfügung, wie dies beispielsweise im Fall eines Common-mode-Fehlers passieren kann, bleibt das Flugsteuersystem dennoch aufgrund des Backup-Datennetzwerks funktionsfähig. Das Backup-Datennetzwerk, als der Backup-Datenbus des ersten und/oder der zweiten Datenbussystems ist auch nicht für den auftretenden Common-mode-Fehler anfällig, da die zugrundeliegende Bustechnologie zu dem Hauptdatennetzwerk verschieden ist.

Nach einer optionalen Modifikation der Erfindung nutzen der erste Datenbus und der zweiten Datenbus dieselbe Bustechnologie, wobei vorzugsweise auch das gleiche Übertragungsprotokoll, beispielsweise ein Time-Triggered-Protocol (TTP) verwendet wird.

Dadurch werden die Entwicklungskosten für das redundante Vorsehen des ersten Datenbusses und des zweiten Datenbusses sowohl im ersten Datenbussystem als auch im zweiten Datenbussystem signifikant reduziert. Ein gleichzeitiger Ausfall dieser beiden Bussysteme, der auf die Verwendung der selben Bustechnologie zurückzuführen ist, wird zwar als sehr unwahrscheinlich angesehen, kann aber nicht mit vollständiger Sicherheit ausgeschlossen werden.

Zur Vermeidung eines Versagens des Flugsteuersystems aufgrund eines gleichartigen Fehlers (common-mode-failure) im Hauptdatennetzwerk der beispielhaft zu einer Störung oder Ausfall des Hauptdatennetzwerks (erster und zweiter Datenbus des ersten und/oder zweiten Datenbussystems) führen könnte, ist der Backup-Datenbus vorgesehen, der sich technologisch von dem ersten Datenbus und dem zweiten Datenbus unterscheidet. Fallen nun die beiden zueinander redundant vorgesehenen Netzwerke des Hauptdatennetzwerks aus, übernehmen die Fernelektronikeinheiten oder die Fernelektronikeinheit (auch Remote Electronic Unit, REU) die benötigten Daten von dem Backup-Bus und gewährleisten weiterhin eine sichere Betätigung der Steuerflächen oder der Steuerfläche.

Wie oberhalb bereits dargelegt, ist erfindungsgemäß vorgesehen, dass das Flugsteuersystem dazu ausgelegt ist, bei einem Fehlerzustand oder einem Ausfall des ersten Datenbusses und des zweiten Datenbusses den Backup-Datenbus zum Übermitteln von Daten zwischen der Aktuator-Steuerelektronik und der ersten Fernelektronikeinheit und/oder zwischen der ersten Verarbeitungseinheit und der Aktuator-Steuerelektronik zu verwenden. Dadurch wird eine gegenüber den aus dem Stand der Technik bekannten Flugsteuersystemen erhöhte Systemsicherheit gewährleistet.

Nach einer weiteren erfindungsgemäßen Modifikation der Erfindung kann dabei vorgesehen sein, dass der Backup-Datenbus ferner nur mit Fernelektronikeinheiten verbunden ist, die zum Ansteuern der Steuerflächen für einen sicheren Flugbetrieb erforderlich sind.

So kann vorgesehen sein, dass der Backup-Datenbus nur mit einem Teil der Komponenten in Verbindung steht, die regulär über den ersten bzw. zweiten Datenbus des ersten bzw. zweiten Datenbussystems angebunden sind. In anderen Worten wird also bei einem Ausfall des redundant ausgelegten Hauptdatennetzwerks in Kauf genommen, dass nur die für die Flugsicherheit unerlässlichen Steuerflächen weiterhin betätigbar bleiben und andere weniger kritische Aktuatoren nicht mehr angesteuert werden können. Der Backup-Datenbus stellt demnach kein vollständiges redundantes System dar, sondern dient nur zum Erhalten der Betriebsfähigkeit einer Untergruppe der durch den ersten und den zweiten Datenbus betätigbaren Komponenten. Diese Untergruppe kann dabei nur für die Flugsicherheit erforderliche Komponenten erfassen.

Hierin liegt auch der Vorteil in der einfacheren Integration des Backup-Datenbusses, da dieser über einen geringeren Umfang und eine beschränkte Verbindung zu den mehreren im Flugzeug ansteuerbaren Aktuatoren bzw. Steuerflächen verfügt. Diejenigen Komponenten, die mit dem Backup-Datenbus in Verbindung stehen sind dabei für den sogenannten "Minimum Control"-Betrieb erforderlich, die eine sichere Betätigung des Luftfahrzeugs ermöglichen. Dazu gehören einige wenige ausgewählte Steuerflächen an dem Luftfahrzeug.

Dabei kann vorgesehen sein, dass die Ansteuerung der zum "Minimum-Control"-Betrieb benötigten Steuerflächen in direkter Beziehung zu den Pilotenvorgaben steht. So kann ein sicherer Flugbetrieb auch bei fehlerbehafteter oder fehlender Kommunikation mit den Flight-Control-Computern bzw. bei Ausfall aller Flight-Control-Computer gewährleistet werden.

Nach einer Fortbildung der vorliegenden Erfindung umfasst die Aktuator-Steuerelektronik mehrere Zentralrechner, die jeweils die der Aktuator-Steuerelektronik zugedachten Funktionen redundant ausüben. So können beispielsweise mindestens vier Zentralrechner vorgesehen sein, die jeweils dazu dienen, Steuersignale entgegenzunehmen, zu berechnen und weiterzuleiten. Das redundante Vorsehen der mehreren Zentralrechner ist ein wesentlicher Bestandteil bei der erhöhten Systemverfügbarkeit des Flugsteuersystems. Von den bspw. vier Zentralrechnern wirken zwei mit dem ersten Datenbus des ersten Datenbussystems und weitere zwei Zentralrechner mit dem zweiten Datenbussystem des ersten Datenbussystems zusammen.

Dabei kann ferner vorgesehen sein, dass die mehreren Zentralrechner und/oder die mehreren Fernelektronikeinheiten und/oder die mehreren Verarbeitungseinheiten jeweils in unterschiedliche Typen unterteilbar sind, die sich in ihrer Hardware und ihrer Software voneinander unterscheiden können, um einen gleichzeitigen Ausfall von einander redundanten elektronischen Geräten zu vermeiden. Auch hier gilt erneut, dass "common-mode"-Fehler oftmals darin ihre Ursache finden, dass die verwendete Hardware bzw. die aufgespielte Software fehlerhaft ist, sodass das physische Duplizieren zum Schaffen einer Redundanz oftmals nicht die gewünschte Erhöhung bezüglich der Systemsicherheit liefert. Von daher ist es ratsam, die zueinander in ihrer Funktion redundanten Bauteile bzw. elektronischen Geräte mithilfe von unterschiedlicher Hardware und/oder verschieden programmierter Software zu verkörpern.

Nach einer bevorzugten Ausführung der Erfindung ist der mindestens eine Zentralrechner eines ersten Typs mit den Fernelektronikeinheiten eines ersten Typs über den ersten Datenbus des ersten Datenbussystems verbunden und der mindestens eine Zentralrechner eines anderen Typs mit den Fernelektronikeinheiten eines anderen Typs über den zweiten Datenbus des ersten Datenbussystems verbunden. Bei der Verbindung von Komponenten eines bestimmten Typs sowie der Verbindung von Komponenten eines anderen Typs ist es dann von Vorteil, wenn dieselbe Bustechnologie zur Anwendung kommt, da die Entwicklung und die Umsetzung von zwei unabhängigen und unterschiedlichen Datenbusnetzwerken sehr aufwendig und kostenintensiv ist. Im vorliegenden Fall kann hingegen dieselbe Bustechnologie zweimal verwendet werden. Dies führt erneut zu einer besonders hohen Systemverfügbarkeit des Flugsteuersystems. Dabei werden die Komponenten des Typs A mit einem der zwei Datenbusse verbunden, wohingegen die Komponenten des Typs B mit einem anderen der zwei Datenbusse verbunden werden. Diese beiden Datenbusse sind in ihrer verwendeten Technologie identisch.

Nach einer Fortbildung der vorliegenden Erfindungsidee ist mindestens ein Zentralrechner eines ersten Typs mit der mindestens einen Verarbeitungseinheit eines erstens Typs über den ersten Datenbus des zweiten Datenbussystems verbunden und der mindestens eine Zentralrechner eines anderen Typs mit der mindestens einen Verarbeitungseinheit eines anderen Typs über den zweiten Datenbus des zweiten Datenbussystems verbunden. Hier ergeben sich die analogen Vorteile bei der Systemverfügbarkeit wie bereits anhand des ersten Datenbussystems gezeigt.

Vorzugsweise kann vorgesehen sein, dass der mindestens eine Zentralrechner eines ersten Typs mit dem ersten Datenbus und dem Backup-Bus des ersten Datenbussystems und dem Backup-Bus des zweiten Datenbussystems verbunden ist, wobei ferner der mindestens eine Zentralrechner eines zweiten Typs mit dem zweiten Datenbus des ersten Datenbussystems und den zweiten Datenbus des zweiten Datenbussystems verbunden ist.

Indem sich der Backup-Datenbus auf zwei Zentralrechner stützt, also mit diesen verbunden ist, ist es auch möglich das Flugsteuersystem sicher auszuführen, wenn einer der beiden Zentralrechner bei Verwendung des Backup-Datenbusses ein Fehlverhalten zeigt. Dadurch ergibt sich selbst im Backup-Fall eine besonders hohe Verfügbarkeit des Flugsteuersystems, da die Eingaben bzw. das Verhalten des fehlerhaften Zentralrechners durch den fehlerfreien Zentralrechner durch den fehlerfrei arbeitenden weiteren Zentralrechner ersetzt.

Demnach kann also auch vorgesehen sein, dass der Backup-Datenbus, insbesondere derjenige des ersten Datenbussystems, mit mehreren Zentralrechner verbunden ist, vorzugsweise mit Zentralrechners eines der mehreren verschiedenen Typen.

Ferner kann vorgesehen sein, dass das Flugsteuersystem einen Flugsteuerrechner umfasst, der in dem zweiten Datenbussystem über eine separate Datenbusleitung mit der Aktuator-Steuerelektronik verbunden ist, wobei die separate Datenbusleitung auf derselben Bustechnologie wie der Backup-Datenbus des zweiten Datenbussystems basiert. Vorzugsweise verwendet die separate Datenbusleitung dieselbe Bustechnologie wie der Backup-Datenbus und auch dasselbe Protokoll.

Zudem ist möglich, dass das Flugsteuersystem ferner mindestens einen Flugsteuerrechner umfasst, der mit der Aktuator-Steuerelektronik verbunden ist. Dabei kann vorgesehen sein, dass der mindestens eine Flugsteuerrechner nur mit den Zentralrechnern der Aktuator-Steuerelektronik verbunden ist, die auch mit dem Backup-Datenbus verbunden sind. Nach einer Modifikation der Erfindung ist auch möglich, dass die Soll-Steuersignale zum Betätigen der Steuerflächen von dem Flugsteuerrechner kommen.

Zudem ist es vorteilhaft die während eines Minimalbetriebs (= Zustand des Flugsteuersystems im Backup-Fall mit Hilfe des Backup-Datenbusses) vorherrschende Systemkonfiguration auch ohne verfügbaren Hauptdatenbus (erster und zweiter Datenbus des ersten und/oder zweiten Datenbussystems) einem Luftfahrzeugführer zur Anzeige zu bringen, beispielsweise im Cockpit, oder einer Datenaufzeichnungseinheit zuzuführen. So wird mithilfe der separaten Datenbusleitung ein Datenaustausch zwischen den Flugsteuercomputern und der Aktuator-Steuerelektronik gewährleistet. Dabei dienen die Flugsteuercomputer nur als Datenkonzentratoren, sodass diese die Daten an weitere Avionik-Computer weiterleiten. Somit ist es also auch bei Ausfall des Hauptdatennetzwerks (erster und zweiter Datenbus des ersten Datenbussystems und/oder erster und zweiter Datenbus des zweiten Datenbussystems) möglich, dass die Stellungen der relevanten von dem Backup-Datenbus abgedeckten Steuerflächen einen Luftfahrzeugführer zur Kenntnis gebracht werden, so dass dieser die Anzeigen im' Cockpit wie gewohnt ablesen und auch auf die Richtigkeit der Anzeigen im Backup-Fall vertrauen kann. Alternativ kann so auch das Aufzeichnen der aktuellen Systemkonfiguration beispielsweise durch eine Blackbox oder dergleichen fortgeführt werden.

Nach einer vorteilhaften Ausführung der vorliegenden Erfindung ist der mindestens eine Flugsteuerrechner mit den mehreren Zentralrechnern verbunden. Vorzugsweise sind die mehreren Zentralrechner von einem der mehreren Typen an Zentralrechnern zudem auch mit dem Backup-Datenbus des ersten Datenbussystems und dem Backup-Datenbus des zweiten Datenbussystems verbunden.

Nach einer optionalen Modifikation der Erfindung ist das Flugsteuersystem dazu ausgelegt, in einem fehlerfreien Zustand dem ersten Hauptdatenbus, der dem ersten Datenbus des ersten Datenbussystems und dem ersten Datenbus des zweiten Datenbussystems umfasst, und/oder den zweiten Hauptdatenbus, der den zweiten Datenbus des ersten Datenbussystems und dem zweiten Datenbus des zweiten Datenbussystems umfasst, zur Datenübermittlung zu nutzen, und in einem fehlerbehafteten Zustand, bei Ausfall oder Störung von sowohl dem ersten Hauptdatenbus als auch dem zweiten Hauptdatenbus, dem Backup-Datenbus des ersten Datenbussystems und dem Backup-Datenbus des zweiten Datenbussystems zur Datenübermittlung zu nutzen.

Aufgrund der hohen System- und Geräteverfügbarkeit, welche durch die oben beschriebene Duplexarchitektur des Hauptbusses bereitgestellt wird, beschränkt sich der Backup-Datenbus nur noch auf einen Datenaustausch zwischen den Rechnern, welche ausschließlich als Minimalkonfiguration für einen sicheren Flugbetrieb benötigt werden. Systemkomponenten und dazugehörige elektronische Geräte, die nicht für die Minimalkonfiguration (Minimum Control) notwendig sind, werden auch nicht in das Backup-Netzwerk eingebunden. Dies führt zu einer Reduzierung der Komplexität, des Verkabelungsaufwands, des Kabelgewichts und der Installationskosten.

Ferner kann vorgesehen sein, dass der Datenaustausch zwischen den mehreren Zentralrechnern der Aktuator-Steuerelektronik, welcher zum Beispiel für die Berechnung des Kraftkonfliktes zwischen aktiv parallel angesteuerten Antriebseinheiten oder beispielhaft zum Abgleich der Steuerkommandos benötigt wird, über den Hauptdatenbus erfolgt. Damit kann auf eine eigenständige Datenbusverbindung zwischen den Zentralrechnern zum Zwecke der Querkommunikation verzichtet werden.

Insgesamt kann dadurch auch das EMC-Verhalten durch konsequente Umsetzung eines Datenbusnetzwerks und der Vermeidung von analogen Signalverbindungen verbessert werden.

Die Erfindung betrifft ferner ein Luftfahrzeug, insbesondere ein Flugzeug mit einem Flugsteuersystem nach einer der vorstehend aufgeführten Varianten.

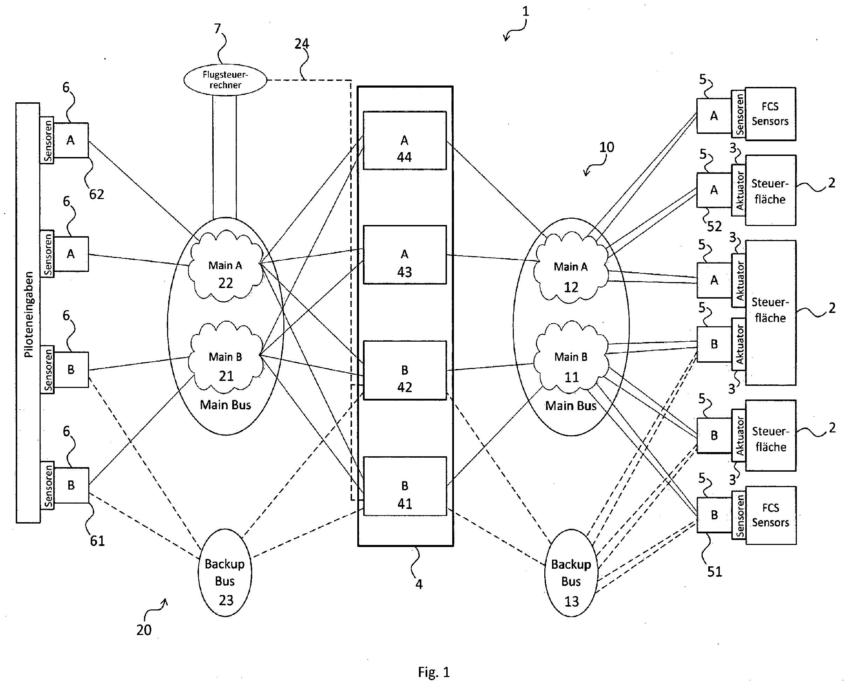

Weitere Merkmale, Einzelheiten und Vorteile der Erfindung werden anhand der Figurenbeschreibung der einzigen Figur ersichtlich.

Dabei zeigt die Figur eine schematische Darstellung der Umsetzung eines erfindungsgemäßen Flugsteuersystems.

Auf der linken Seite der Darstellung erkennt man mehrere Verarbeitungseinheiten 6 des Flugsteuersystems 1, die dazu ausgelegt sind die Piloteneingaben mit Hilfe von Sensoren aufzunehmen und über Datennetzwerk weiterzureichen. Dabei ist von der Erfindung auch der Fall umfasst, wonach das Luftfahrzeug über keinen menschlichen Piloten verfügt, sondern mit Hilfe eines Computers, der die Rolle des Piloten übernommen hat, gesteuert wird.

Ausgehend von den Verarbeitungseinheiten 6 werden die Soll-Steuersignale zum Ansteuern von Steuerflächen 2 des Luftfahrzeugs über das zweite Datenbussystem 20 an die Aktuator-Steuerelektronik 4 übermittelt. Von dieser werden die Soll-Steuersignale in ein von den Aktuatoren 5 lesbares Format umgewandelt und über das erste Datenbussystem 10 gesendet. Nach Erreichen des entsprechenden Sendesignals von der Aktuator-Steuerelektronik 4 betätigt die Fernelektronikeinheit 5 den Aktuator 5 entsprechend, sodass die Steuerfläche 2 eine Bewegung ausführt.

Da die oben erläuterte Informationsverbindung von der Verarbeitungseinheit 6 hin zu der Fernelektronikeinheit 5 bzw. dem Aktuator 3 unter keinen Umständen währen eines Flugs eines Luftfahrzeugs unterbrochen werden sollte, da ansonsten die Manövrierunfähigkeit des Luftfahrzeugs die Folge ist, und insbesondere auch die Kommunikationsverbindung von der Aktuator-Steuerelektronik 4 zu der Fernelektronikeinheit 5 bzw. dem Aktuator zu erhalten ist, werden die entsprechenden Verbindungsmittel, hier die Datenbussysteme 10 bzw. 20 redundant ausgelegt.

Daher gibt es mehrere zueinander redundante Verarbeitungseinheiten 6, mehrere Datenbusse 21, 22 in dem zweiten Datenbussystem 20, mehrere Zentralrechner 41, 42, 43, 44, die jeweils die Aufgaben der Aktuator-Steuerelektronik 4 vollziehen, mehrere Datenbusse 11, 12 in dem ersten Datenbussystem 10 sowie mehrere Fernelektronikeinheiten 5 die zueinander redundant sind.

Fällt nun der erste Datenbus 21 oder der zweite Datenbus 22 in dem zweiten Datenbussystem 20 bzw. der erste Datenbus 11 oder der zweite Datenbus 12 in dem ersten Datenbussystem 10 aus, übernimmt die Übermittlung der Information der noch nicht ausgefallene Datenbus. Kommt es hingegen zu einem Ausfall beider Datenbusse (Main A und Main B) wird die Manövrierfähigkeit des Luftfahrzeugs dadurch gewährleistet, dass ein in seiner Bustechnologie zu den mehreren Datenbussen (Main A und Main B) verschiedener Backup-Datenbus 23, 13 die Informationsweiterleitung sicherstellt. Dabei umfasst der Ausdruck Main A den zweiten Datenbus 22 des zweiten Datenbussystems 20 und den zweiten Datenbus 12 des ersten Datenbussystems 10, sowie optional die damit verbundenen Zentralrechner 43, 44. Main B hingegen umfasst den erste Datenbus 21 des zweiten Datenbussystems 20 und den ersten Datenbus 11 des ersten Datenbussystems 10, sowie optional die damit verbundenen Zentralrechner 41, 42.

Dabei ist das erfindungsgemäße Flugsteuersystem 1 derart ausgebildet, dass für die Bestimmung der anzusteuernden Positionen der Steuerflächen 2 und zur Überwachung der Flugsteuerungs-Systemkomponenten 4 Zentralrechner 41, 42, 43, 44 vorgesehen sind, die jeweils redundant zueinander sind und die Aufgaben der Aktuator-Steuerelektronik 4 übernehmen. Dabei sind die mit der Typbezeichnung A bezeichneten Zentralrechner 44, 43 dazu ausgelegt, dass sie paarweise weitestgehend dieselben Steuer- und Überwachungsfunktionen redundant ausführen. Selbiges gilt für die mit der Typenbezeichnung B beschrifteten Zentralrechner 41, 42, die paarweise weitestgehend dieselben Steuer- und Überwachungsfunktionen redundant ausüben. Die mit der Typenbezeichnung A bzw. B bezeichneten Zentralrechner 41, 42, 43, 44 sind so mit den Fernelektronikeinheiten 5 verbunden, dass der Ausfall eines Zentralrechners bzw. einer Busverbindung zwischen einem Zentralrechner 41, 42, 43, 44 und einer Fernelektronikeinheit 5 von der Fernelektronikeinheit 5 selbst erkannt wird und die Daten des redundanten Zentralrechners 41, 42, 43, 44 desselben Typs übernimmt. Diese Übernahmefunktion erhöht die Gesamtverfügbarkeit des Flugsteuerungssystems im Fehlerfall erheblich.

Zudem ist vorgesehen, dass die innerhalb des Hauptdatennetzwerks (Main Bus umfassend Main A und Main B) bezeichneten elektronischen Geräte mit der Typenbezeichnung A in einem Bussystem (bspw. Main A) angeordnet sind und die mit der Typenbezeichnung B versehenen Geräte in einem anderen Bussystem (bspw. Main B) verbunden sind. Beim Ausfall einer elektronischen Komponente eines Typs (bspw. Typ A) wird die Kommunikation dann über das andere Bussystem (Main B) durchgeführt, das die Geräte des anderen Typs B miteinander verbindet.

## Patentansprüche

1. Flugsteuersystem (1) zum Betätigen einer Steuerfläche (2) eines Luftfahrzeugs, umfassend:
mehrere Aktuatoren (3) zum redundanten Betätigen einer Steuerfläche (2) des Luftfahrzeugs,
eine Aktuator-Steuerelektronik (4) zum Entgegennehmen, Berechnen und Weiterleiten von Steuersignalen für die durch die mehreren Aktuatoren (3) zu betätigende Steuerfläche (2),
mehrere Fernelektronikeinheiten (5) zum jeweiligen Ansteuern und Überwachen eines entsprechenden Aktuators (3), und
ein erstes Datenbussystem (10) zum Übermitteln von Daten zwischen der Aktuator-Steuerelektronik (4) und den mehreren Fernelektronikeinheiten (5), wobei das erste Datenbussystem (10) umfasst:
einen ersten Datenbus (11) zum Übermitteln von Daten zwischen der Aktuator-Steuerelektronik (4) und einer ersten der mehreren Fernelektronikeinheiten (5),
einen zweiten Datenbus (12) zum Übermitteln von Daten zwischen der Aktuator-Steuerelektronik (4) und einer zweiten der mehreren Fernelektronikeinheiten (5), wobei
der erste Datenbus (11) und der zweite Datenbus (12) auf derselben Bustechnologie basieren,
**dadurch gekennzeichnet, dass**
das erste Datenbussystem (10) ferner einen Backup-Datenbus (13) zum Übermitteln von Daten zwischen der Aktuator-Steuerelektronik (4) und der ersten Fernelektronikeinheit (3) aufweist, wobei
der Backup-Datenbus (13) in seiner Bustechnologie zu dem ersten Datenbus (11) und dem zweiten Datenbus (12) verschieden ist und nur mit Fernelektronikeinheiten (5) verbunden ist, die zum Ansteuern von Steuerflächen (2) ausgebildet sind, welche für einen sicheren Flugbetrieb erforderlich sind und wobei
das Flugsteuersystem (1) dazu ausgelegt ist, bei einem Fehlerzustand oder einem Ausfall des ersten Datenbusses (11) und des zweiten Datenbusses (12) den Backup-Datenbus (13) zum Übermitteln von Daten zwischen der Aktuator-Steuerelektronik (4) und der ersten Fernelektronikeinheit (3) zu verwenden.

2. Flugsteuersystem (1) nach Anspruch 1, ferner umfassend
mehrere Verarbeitungseinheiten (6) zum redundanten Aufnehmen und Auswerten von Soll-Steuersignalen für die Steuerfläche (2), und
ein zweites Datenbussystem (20), das in seinem konzeptionellen Aufbau dem ersten Datenbussystem (10) entspricht, wobei bei dem zweiten Datenbussystem (20):
eine erste der mehreren Verarbeitungseinheiten (6) über einen ersten Datenbus (21) an die Aktuator-Steuerelektronik (4) angebunden ist, um die Soll-Steuersignale zu übermitteln,
eine zweite der mehreren Verarbeitungseinheiten (6) über einen zweiten Datenbus (22) an die Aktuator-Steuerelektronik (4) angebunden ist, um die Soll-Steuersignale zu übermitteln, und
ein Backup-Datenbus (23) mit der ersten Verarbeitungseinheit (6) und der Aktuator-Steuerelektronik (4) verbunden ist, um eine Übermittlung der Soll-Steuersignale an die Aktuator-Steuerelektronik (4) zu ermöglichen.

3. Flugsteuersystem (1) nach einem der vorhergehenden Ansprüche, wobei der erste Datenbus und der zweite Datenbus dieselbe Bustechnologie nutzen und vorzugsweise auch das gleiche Übertragungsprotokoll, bspw. ein Time Triggered Protokoll verwenden.

4. Flugsteuersystem (1) nach einem der Ansprüche 2 oder 3, wobei das Flugsteuersystem (1) dazu ausgelegt ist, bei einem Fehlerzustand oder einem Ausfall des ersten Datenbusses (21) und des zweiten Datenbusses (22) den Backup-Datenbus (23) zum Übermitteln von Daten zwischen der ersten Verarbeitungseinheit (6) und der Aktuator-Steuerelektronik (4) zu verwenden.

5. Flugsteuersystem (1) nach einem der vorhergehenden Ansprüche, wobei die Aktuator-Steuerelektronik (4) mehrere Zentralrechner (41, 42, 43, 44) umfasst, die jeweils die der Aktuator-Steuerelektronik (4) zugedachten Funktionen redundant ausüben.

6. Flugsteuersystem (1) nach Anspruch 5, wobei die mehreren Zentralrechner (41, 42, 43, 44) und/oder die mehreren Fernelektronikeinheiten (5) und/oder die mehreren Verarbeitungseinheiten (6) jeweils in unterschiedliche Typen einteilbar sind, die sich in ihrer Hardware und Software voneinander unterscheiden, um einen gleichzeitigen Ausfall von zueinander redundanten elektronischen Geräten zu vermeiden.

7. Flugsteuersystem (1) nach Anspruch 6, wobei die Zentralrechner (41, 42) eines ersten Typs mit den Fernelektronikeinheiten (51) eines ersten Typs über den ersten Datenbus (11) des ersten Datenbussystems (10) verbunden sind und die Zentralrechner (43, 44) eines anderen Typs mit den Fernelektronikeinheiten (52) eines anderen Typs über den zweiten Datenbus (12) des ersten Datenbussystems (10) verbunden sind.

8. Flugsteuersystem (1) nach Anspruch 6 oder 7, wobei die Zentralrechner (41, 42) eines ersten Typs mit den Verarbeitungseinheiten (61) eines ersten Typs über den ersten Datenbus (21) des zweiten Datenbussystems (20) verbunden sind und die Zentralrechner (43, 44) eines anderen Typs mit den Verarbeitungseinheiten (62) eines anderen Typs über den zweiten Datenbus (22) des zweiten Datenbussystems (20) verbunden sind.

9. Flugsteuersystem (1) nach einem der Ansprüche 6 bis 8, wobei die Zentralrechner (41, 42) eines ersten Typs mit dem ersten Datenbus (11, 21) und dem Backup-Datenbus (13, 23) des ersten und des zweiten Datenbussystems (10, 20) verbunden sind und die Zentralrechner (43, 44) eines zweiten Typs mit dem zweiten Datenbus (12, 22) des ersten und des zweiten Datenbussystems (10, 20) verbunden sind.

10. Flugsteuersystem (1) nach einem der vorhergehenden Ansprüche, wobei der Backup-Datenbus (13, 23), insbesondere derjenige des ersten Datenbussystems (13), mit mehreren Zentralrechnern (41, 42, 43 ,44) verbunden ist, vorzugsweise mit Zentralrechnern (41, 42) eines der mehreren Typen.

11. Flugsteuersystem (1) nach einem der vorhergehenden Ansprüche, mindestens jedoch mit den Merkmalen des Anspruchs 2, ferner umfassend mindestens einen Flugsteuerrechner (7), der in dem zweiten Datenbussystem (20) über eine separate Datenbusleitung (24) mit der Aktuator-Steuerelektronik (4) verbunden ist, wobei die Datenbusleitung (24) auf derselben Bustechnologie wie der Backup-Datenbus (20) des zweiten Datenbussystems (20) basiert.

12. Flugsteuersystem (1) nach Anspruch 11 und Anspruch 6, wobei der mindestens eine Flugsteuerrechner (7) mit den mehreren Zentralrechnern (41, 42) eines bestimmten Typs verbunden ist, die zudem auch mit dem Backup-Datenbus (13) des ersten Datenbussystems (10) und dem Backup-Datenbus (23) des zweiten Datenbussystems (20) verbunden sind.

13. Flugsteuersystem (1) nach einem der vorhergehenden Ansprüche, wobei das Flugsteuersystem (1) dazu ausgelegt ist,
in einem fehlerfreien Zustand den ersten Hauptdatenbus (11, 21), der den ersten Datenbus (11) des ersten Datenbussystems (10) und den ersten Datenbus (21) des zweiten Datenbussystems (20) umfasst, und/oder den zweiten Hauptdatenbus (12, 22), der den zweiten Datenbus (12) des ersten Datenbussystems (10) und den zweiten Datenbus (22) des zweiten Datenbussystems (20) umfasst, zur Datenübermittlung zu nutzen, und
in einem fehlerbehafteten Zustand, bei Ausfall oder Störung von sowohl dem ersten Hauptdatenbus (11, 21) als auch dem zweiten Hauptdatenbus (12, 22), den Backup-Datenbus (13) des ersten Datenbussystems (10) und den Backup-Datenbus (23) des zweiten Datenbussystems (20) zur Datenübermittlung zu nutzen.

14. Luftfahrzeug, insbesondere Flugzeug mit einem Flugsteuersystem (1) nach einem der vorhergehenden Ansprüche.

## Claims

1. A flight control system (1) for actuating a control surface (2) of an aircraft, comprising:
a plurality of actuators (3) for redundantly actuating a control surface (2) of the aircraft,
actuator control electronics (4) for receiving, calculating and forwarding control signals for the control surface (2) which is to be actuated by the plurality of actuators (3),
a plurality of remote electronic units (5) for each controlling and monitoring a corresponding actuator (3), and
a first data bus system (10) for transferring data between the actuator control electronics (4) and the plurality of remote electronic units (5), wherein the first data bus system (10) comprises:
a first data bus (11) for transferring data between the actuator control electronics (4) and a first one of the plurality of remote electronic units (5),
a second data bus (12) for transferring data between the actuator control electronics (4) and a second one of the plurality of remote electronic units (5), wherein
the first data bus (11) and the second data bus (12) are based on the same bus technology,
**characterised in that**
the first data bus system (10) further has a backup data bus (13) for transferring data between the actuator control electronics (4) and the first remote electronic unit (3), wherein
the backup data bus (13) is different in its bus technology from the first data bus (11) and the second data bus (12) and is connected only to remote electronic units (5) which are configured for controlling control surfaces (2) which are necessary for safe flight operation, and wherein
the flight control system (1) is designed, in the event of a fault condition or a failure of the first data bus (11) and of the second data bus (12), to use the backup data bus (13) for transferring data between the actuator control electronics (4) and the first remote electronic unit (3).

2. A flight control system (1) according to claim 1, further comprising
a plurality of processing units (6) for redundantly recording and evaluating desired control signals for the control surface (2), and
a second data bus system (20), which corresponds in its design structure to the first data bus system (10), wherein in the second data bus system (20):
a first one of the plurality of processing units (6) is linked via a first data bus (21) to the actuator control electronics (4) in order to transfer the desired control signals,
a second one of the plurality of processing units (6) is linked via a second data bus (22) to the actuator control electronics (4) in order to transfer the desired control signals, and
a backup data bus (23) is connected to the first processing unit (6) and the actuator control electronics (4) in order to make transfer of the desired control signals to the actuator control electronics (4) possible.

3. A flight control system (1) according to one of the preceding claims, wherein the first data bus and the second data bus use the same bus technology and preferably also the same transmission protocol, for example a time triggered protocol.

4. A flight control system (1) according to one of claims 2 or 3, wherein the flight control system (1) is designed, in the event of a fault condition or a failure of the first data bus (21) and of the second data bus (22), to use the backup data bus (23) for transferring data between the first processing unit (6) and the actuator control electronics (4).

5. A flight control system (1) according to one of the preceding claims, wherein the actuator control electronics (4) comprise a plurality of mainframe computers (41, 42, 43, 44) which each redundantly execute the functions intended for the actuator control electronics (4).

6. A flight control system (1) according to claim 5, wherein the plurality of mainframe computers (41, 42, 43, 44) and/or the plurality of remote electronic units (5) and/or the plurality of processing units (6) can each be divided into different types which differ from each other in their hardware and software in order to avoid simultaneous failure of electronic devices which are redundant from each other.

7. A flight control system (1) according to claim 6, wherein the mainframe computers (41, 42) of a first type are connected to the remote electronic units (51) of a first type via the first data bus (11) of the first data bus system (10), and the mainframe computers (43, 44) of another type are connected to the remote electronic units (52) of another type via the second data bus (12) of the first data bus system (10).

8. A flight control system (1) according to claim 6 or 7, wherein the mainframe computers (41, 42) of a first type are connected to the processing units (61) of a first type via the first data bus (21) of the second data bus system (20), and the mainframe computers (43, 44) of another type are connected to the processing units (62) of another type via the second data bus (22) of the second data bus system (20).

9. A flight control system (1) according to one of claims 6 to 8, wherein the mainframe computers (41, 42) of a first type are connected to the first data bus (11, 21) and the backup data bus (13, 23) of the first and the second data bus system (10, 20), and the mainframe computers (43, 44) of a second type are connected to the second data bus (12, 22) of the first and the second data bus system (10, 20).

10. A flight control system (1) according to one of the preceding claims, wherein the backup data bus (13, 23), in particular that of the first data bus system (13), is connected to a plurality of mainframe computers (41, 42, 43, 44), preferably to mainframe computers (41, 42) of one of the plurality of types.

11. A flight control system (1) according to one of the preceding claims, but at least having the features of claim 2, further comprising at least one flight control computer (7) which is connected to the actuator control electronics (4) in the second data bus system (20) via a separate data bus line (24), wherein the data bus line (24) is based on the same bus technology as the backup data bus (20) of the second data bus system (20).

12. A flight control system (1) according to claim 11 and claim 6, wherein the at least one flight control computer (7) is connected to the plurality of mainframe computers (41, 42) of a particular type, which in addition are also connected to the backup data bus (13) of the first data bus system (10) and the backup data bus (23) of the second data bus system (20).

13. A flight control system (1) according to one of the preceding claims, wherein the flight control system (1) is designed,
in a fault-free state, to use the first main data bus (11, 21), which comprises the first data bus (11) of the first data bus system (10) and the first data bus (21) of the second data bus system (20), and/or the second main data bus (12, 22), which comprises the second data bus (12) of the first data bus system (10) and the second data bus (22) of the second data bus system (20), for data transfer, and
in a faulty state, in the event of failure or disruption of both the first main data bus (11, 21) and the second main data bus (12, 22), to use the backup data bus (13) of the first data bus system (10) and the backup data bus (23) of the second data bus system (20) for data transfer.

14. An aircraft, in particular aeroplane, having a flight control system (1) according to one of the preceding claims.

## Revendications

1. Système de commande de vol (1) pour actionner une gouverne (2) d'un aéronef, comprenant :
plusieurs actionneurs (3) pour actionner de manière redondante une gouverne (2) de l'aéronef,
une électronique de commande d'actionneur (4) pour réceptionner, calculer et transférer des signaux de commande pour la gouverne (2) à actionner par les plusieurs actionneurs (3),
plusieurs unités électroniques distantes (5) pour piloter et surveiller respectivement un actionneur (3) correspondant, et
un premier système de bus de données (10) pour transmettre des données entre l'électronique de commande d'actionneur (4) et les plusieurs unités électroniques distantes (5), dans lequel le premier système de bus de données (10) comprend :
un premier bus de données (11) pour transmettre des données entre l'électronique de commande d'actionneur (4) et une première des plusieurs unités électroniques distantes (5),
un deuxième bus de données (12) pour transmettre des données entre l'électronique de commande d'actionneur (4) et une deuxième des plusieurs unités électroniques distantes (5), dans lequel
le premier bus de données (11) et le deuxième bus de données (12) se basent sur la même technologie de bus,
**caractérisé en ce que**
le premier système de bus de données (10) présente en outre un bus de données de secours (13) pour transmettre des données entre l'électronique de commande d'actionneur (4) et la première unité électronique distante (3), dans lequel
le bus de données de secours (13) est différent dans sa technologie de bus par rapport au premier bus de données (11) et au deuxième bus de données (12) et est relié seulement à des unités électroniques distantes (5), qui sont réalisées pour piloter des gouvernes (2) qui sont requises pour un fonctionnement en vol en toute sécurité, et dans lequel
le système de commande de vol (1) est configuré pour utiliser, dans le cas d'un état de défaut ou d'une panne du premier bus de données (11) et du deuxième bus de données (12) le bus de données de secours (13) pour transmettre des données entre l'électronique de commande d'actionneur (4) et la première unité électronique distante (3).

2. Système de commande de vol (1) selon la revendication 1, comprenant en outre
plusieurs unités de traitement (6) pour recevoir et évaluer de manière redondante des signaux de commande théoriques pour la gouverne (2), et
un deuxième système de bus de données (20), qui correspond dans son élaboration de conception au premier système de bus de données (10), dans lequel dans le deuxième système de bus de données (20) :
une première des plusieurs unités de traitement (6) est rattachée à l'électronique de commande d'actionneur (4) par l'intermédiaire d'un premier bus de données (21) pour transmettre les signaux de commande théoriques,
une deuxième des plusieurs unités de traitement (6) est rattachée à l'électronique de commande d'actionneur (4) par l'intermédiaire d'un deuxième bus de données (22) pour transmettre les signaux de commande théoriques, et
un bus de données de secours (23) est relié à la première unité de traitement (6) et à l'électronique de commande d'actionneur (4) pour permettre une transmission des signaux de commande théoriques à l'électronique de commande d'actionneur (4).

3. Système de commande de vol (1) selon l'une quelconque des revendications précédentes, dans lequel le premier bus de données et le deuxième bus de données utilisent la même technologie de bus et emploient de préférence également le même protocole de transmission ou un protocole à déclenchement temporel.

4. Système de commande de vol (1) selon l'une quelconque des revendications 2 ou 3, dans lequel le système de commande de vol (1) est configuré pour employer, dans le cas d'un état de défaut ou d'une panne du premier bus de données (21) et du deuxième bus de données (22), le bus de données de secours (23) pour transmettre des données entre la première unité de traitement (6) et l'électronique de commande d'actionneur (4).

5. Système de commande de vol (1) selon l'une quelconque des revendications précédentes, dans lequel l'électronique de commande d'actionneur (4) comprend plusieurs calculateurs centraux (41, 42, 43, 44), qui exercent de manière redondante respectivement les fonctions destinées à l'électronique de commande d'actionneur (4).

6. Système de commande de vol (1) selon la revendication 5, dans lequel les plusieurs calculateurs centraux (41, 42, 43, 44) et/ou les plusieurs unités électroniques distantes (5) et/ou les plusieurs unités de traitement (6) peuvent être répartis respectivement dans des types différents qui se distinguent les uns des autres dans leur matériel et leur logiciel pour éviter une panne simultanée d'appareils électroniques redondants les uns par rapport aux autres.

7. Système de commande de vol (1) selon la revendication 6, dans lequel les calculateurs centraux (41, 42) d'un premier type sont reliés aux unités électroniques distantes (51) d'un premier type par l'intermédiaire du premier bus de données (11) du premier système de bus de données (10) et les calculateurs centraux (43, 44) d'un autre type sont reliés aux unités électroniques distantes (52) d'un autre type par l'intermédiaire du deuxième bus de données (12) du premier système de bus de données (10).

8. Système de commande de vol (1) selon la revendication 6 ou 7, dans lequel les calculateurs centraux (41, 42) d'un premier type sont reliés aux unités de traitement (61) d'un premier type par l'intermédiaire du premier bus de donnée (21) du deuxième système de bus de données (20) et les calculateurs centraux (43, 44) d'un autre type sont reliés aux unités de traitement (62) d'un autre type par l'intermédiaire du deuxième bus de données (22) du deuxième système de bus de données (20).

9. Système de commande de vol (1) selon l'une quelconque des revendications 6 à 8, dans lequel les calculateurs centraux (41, 42) d'un premier type sont reliés au premier bus de données (11, 21) et au bus de données de secours (13, 23) du premier et du deuxième système de bus de données (10, 20) et les calculateurs centraux (43, 44) d'un deuxième type sont reliés au deuxième bus de données (12, 22) du premier et du deuxième système de bus de données (10, 20).

10. Système de commande de vol (1) selon l'une quelconque des revendications précédentes, dans lequel le bus de données de secours (13, 23), en particulier celui du premier système de bus de données (13), est relié à plusieurs calculateurs centraux (41, 42, 43, 44), de préférence à des calculateurs centraux (41, 42) d'un des plusieurs types.

11. Système de commande de vol (1) selon l'une quelconque des revendications précédentes, au moins toutefois avec les caractéristiques de la revendication 2, comprenant en outre au moins un calculateur de commande de vol (7), qui est relié à l'électronique de commande d'actionneur (4) par l'intermédiaire d'une ligne de bus de données (24) séparée dans le deuxième système de bus de données (20), dans lequel la ligne de bus de données (24) se base sur la même technologie de bus que le bus de données de secours (20) du deuxième système de bus de données (20).

12. Système de commande de vol (1) selon la revendication 11 et la revendication 6, dans lequel l'au moins un calculateur de commande de vol (7) est relié aux plusieurs calculateurs centraux (41, 42) d'un type défini, qui sont reliés en outre également au bus de données de secours (13) du premier système de bus de données (10) et au bus de données de secours (23) du deuxième système de bus de données (20).

13. Système de commande de vol (1) selon l'une quelconque des revendications précédentes, dans lequel le système de commande de vol (1) est configuré
pour utiliser, aux fins de la transmission de données, dans un état sans défaut, le premier bus de données principal (11, 21), qui comprend le premier bus de données (11) du premier système de bus de données (10) et le premier bus de données (21) du deuxième système de bus de données (20), et/ou le deuxième bus de données principal (12, 22), qui comprend le deuxième bus de données (12) du premier système de bus de données (10) et le deuxième bus de données (22) du deuxième système de bus de donnée (20), et
pour utiliser, aux fins de la transmission de données, dans un état entaché de défauts, le bus de données de secours (13) du premier système de bus de données (10) et le bus de données de secours (23) du deuxième système de bus de données (20) dans le cas d'une panne ou d'une défaillance à la fois du premier bus de données principal (11, 21) et du deuxième bus de données principal (12, 22).

14. Aéronef, en particulier avion, avec un système de commande en vol (1) selon l'une quelconque des revendications précédentes.
